# FASCICULE DE BREVET EUROPEEN

(11) **EP 1 547 728 B1**
(45) Date de publication et mention de la délivrance du brevet: **25.07.2007**
(21) Numéro de dépôt: 04356195.0
(22) Date de dépôt: 14.12.2004
(51) Int. Cl.: B25B 27/10, F16L 13/14

(54) **Mâchoire de sertissage**
Backe für Pressverbindung
Jaw for pressfitting

(30) Priorité: 24.12.2003 FR 0315403
(43) Date de publication de la demande: 29.06.2005
(73) Titulaire: COMAP, 69008 Lyon (FR)
(72) Inventeur: Le Clinche, Pascal, 69008 Lyon (FR)
(74) Mandataire: Maureau, Philippe

(56) Documents cités:
- DE-A- 2 725 280
- DE-U- 29 519 691
- GB-A- 1 245 043

## Description

La présente invention concerne une mâchoire d'outil de sertissage pour raccordement de tubes. Une mâchoire similaire est décrite dans DE-A-2 725 280.

Lors de l'installation d'un réseau de tubes, l'installateur réalise un assemblage comprenant notamment des tubes et des raccords avec plusieurs phases, successivement d'emboîtement d'un tube et d'un raccord, puis de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis.

La création d'une fuite provoquée au niveau du raccord tant que celui-ci n'est pas serti a notamment été envisagée. Cette approche permet à l'opérateur de détecter les raccords non sertis en mettant l'installation sous pression puis en repérant les fuites, soit visuellement, soit en constatant une pression plus faible que la pression normale dans l'installation, ce qui permet une vérification globale du sertissage des raccords de l'installation. Ces fuites peuvent être provoquées par des joints de forme spécifique, n'assurant pas d'étanchéité avant sertissage, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 995 et WO 01/63160 décrivent deux dispositifs permettant de réaliser de telles fuites provoquées avant sertissage.

Il a également été envisagé d'utiliser des moyens de marquage présent sur chaque raccord sous forme de bague comme décrit dans les documents WO/01/21997 ou DE 100 02 916. Toutefois, ces bagues se montrent difficiles à détruire lors du sertissage par les outils de sertissage.

En conséquence, le but de la présente invention est de fournir un outil de sertissage permettant de détruire de façon certaine la bague lors du sertissage en utilisant une bague dont la fabrication reste simple.

A cet effet, la présente invention a pour objet une mâchoire de sertissage d'un raccord pour tube caractérisée en ce qu'elle comporte au moins une partie en saillie vers l'intérieur de la mâchoire adaptée pour couper une bague de visualisation de sertissage extérieure au raccord, et en ce qu'au moins une partie en saillie est constituée par une nervure orientée parallèlement à l'axe du raccord, lorsque la mâchoire est positionnée sur le raccord.

Avantageusement, la dimension radiale d'au moins une partie en saillie est telle que sa distance minimale à l'axe du raccord, lorsque la mâchoire est en place sur le raccord, est inférieure au rayon extérieur de ce raccord dans sa portion portant une bague de visualisation.

Selon un mode de réalisation, au moins une nervure présente une section triangulaire, perpendiculairement à l'axe.

Avantageusement, au moins une partie en saillie est constituée par un insert rapporté sur la mâchoire.

Selon un mode de réalisation, au moins une partie en saillie est réalisée en acier à haute résistance.

Avantageusement, la mâchoire présente un profil intérieur symétrique par rapport à un plan permettant de la positionner sur le raccord indifféremment de son orientation.

Selon un mode de réalisation, la mâchoire comporte au moins une portion de profil semi-hexagonal, vu en coupe selon un plan perpendiculaire à l'axe du raccord lorsque la mâchoire est positionnée sur le raccord, la distance à l'axe des sommets de l'hexagone étant sensiblement égale au rayon de la portion voisine de la mâchoire, et chaque nervure est positionnée dans le prolongement d'un sommet.

L'invention porte également sur outil de sertissage comportant au moins une mâchoire décrite ci-dessus

De toute façon, l'invention sera bien comprise à l'aide de la description qui suit, en référence au dessin schématique annexé, représentant à titre d'exemple non limitatif, une forme de réalisation d'une mâchoire selon l'invention.

Figure 1 est une vue en perspective éclatée d'une mâchoire selon l'invention dans son environnement comportant un raccord à sertir.

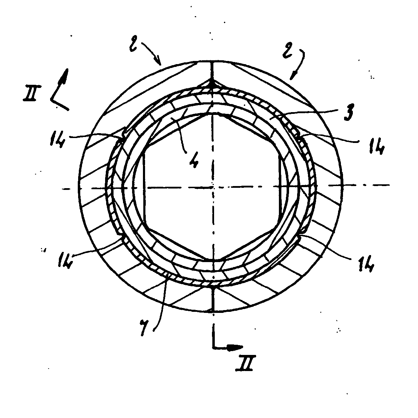

Figure 2 est une vue en coupe longitudinale de deux mâchoires de figure 1 sur un raccord à sertir selon II-II de figure 3.

Figure 3 est une vue en coupe transversale de deux mâchoires de figure 1 sur un raccord à sertir selon III-III de figure 2.

Un outil de sertissage comporte de façon connue deux mâchoires de sertissage 2 qui sont disposées autour d'un embout d'un raccord 3 afin de réaliser son sertissage par pression à froid sur un tube 4.

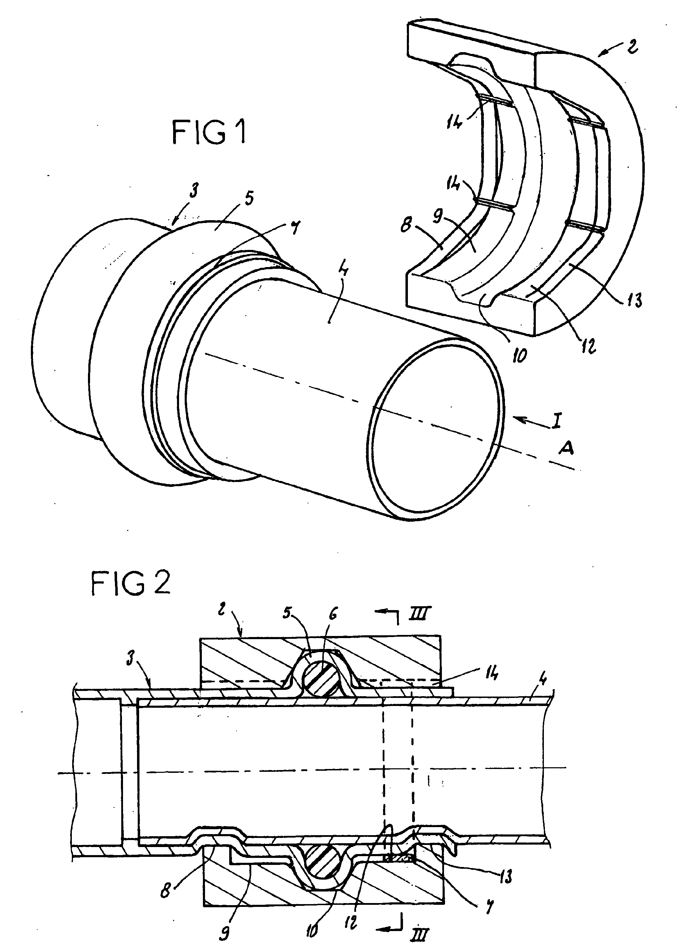

Un raccord 3 de type cuivreux, réalisé en cuivre, laiton ou bronze, permet de relier un tube 4 à une autre partie de l'installation. Le raccord 3 représenté sur la figure 1 pour sa partie le reliant au tube, ou embout, comporte une portion tubulaire d'axe A débouchant sur une ouverture dans laquelle est introduite l'extrémité du tube 4 selon un axe A et selon un sens représenté par la flèche I. Dans cette portion tubulaire est également ménagé un bourrelet annulaire 5 formant à l'intérieur du raccord une gorge annulaire destinée à loger un joint d'étanchéité 6.

Une bague plastique 7 destinée à être détruite lors du sertissage est mot tée sur la paroi extérieure du raccord, entre la base du bourrelet annulaire 5 et l'ouverture.

Lors du sertissage, deux mâchoires 2 vienne se loger autour de l'ouverture du raccord. Chaque mâchoire 2, de forme générale semi circulaire dont l'axe se confond avec l'axe A lors du sertissage, comporte une paroi intérieur e comprenant les portions suivantes :
- une première portion 8 de profil semi-hexagonal, vu en coupe selon un plan perpendiculaire à l'axe A, dont le diamètre est inférieur au diamètre extérieur de la portion tubulaire du raccord 3
- une seconde portion 9 de profil semi-circulaire, de diamètre par rapport à l'axe A sensiblement égal au diamètre extérieur de la portion tubulaire du raccord 3,
- une troisième portion 10 de profil semi-circulaire, de diamètre par rapport à l'axe A légèrement inférieur au diamètre du bourrelet annulaire 5 du raccord 3,
- une quatrième portion 12 de profil semi-circulaire, de diamètre par rapport à l'axe A sensiblement égal au diamètre extérieur de la portion tubulaire du raccord 3, et
- une cinquième portion 13 de profil semi-hexagonal, vu en coupe selon un plan perpendiculaire à l'axe A, dont le diamètre est inférieur au diamètre extérieur de la portion tubulaire du raccord 3.

Les mâchoires 2 sont disposées lors du sertissage sur le raccord 3 de façon à ce que la troisième portion 10 de la mâchoire 2 soit positionnée en regard ou bourrelet annulaire 5 du raccord 3 et déforme légèrement celui-ci afin notamment d'assurer le contact entre le joint d'étanchéité 6 et le raccord 3 d'une part, et entre le joint 6 et la paroi extérieure du tube 4 d'autre part.

Les premières 8 et cinquièmes 13 portions des deux mâchoires 2 permettant de déformer le raccord 3 et le tube 4 dans deux zones symétriques par rapport au bourrelet en leur donnant une forme hexagonale, le tube 4 et le raccord 3 étant ainsi emboîtés sans pouvoir pivoter l'un par rapport à l'autre autour ce l'axe A, les limites de ces zones déformés constituant des butées empêchant le déplacement axial d'axe A du tube 4 par rapport au raccord 3.

Dans ce mode de réalisation, chaque mâchoire comporte de plus quatre nervures 14 en saillie vers l'intérieur, positionnées parallèlement à l'axe A et de profil triangulaire, vu en coupe par un perpendiculaire à l'axe A..

Deux de ces nervures 14 sont positionnées au niveau des sommets du semi-hexagone de la première portion 8 de la machoire 2, et s'étendent longitudinalement sur cette portion et la seconde portion 9, et deux autres parties en saillie sont positionnées au niveau des sommets du semi-hexagone de la cinquième portion 13 de la machoire, et s'étendent longitud nalement sur cette portion 13 et la quatrième portion 12.

La machoire ainsi réalisée est symétrique par rapport à un plan perpendiculaire à l'axe A et passant par le milieu de la troisième portion 10, ce qui facilite son utilisation, l'opérateur n'ayant pas à vérifier le sens de positionnement de cette machoire 2 sur l'embout du raccord 3.

Les nervures 14 peuvent être réalisées par usinage ou sous forme d'inserts rapportés sur la machoire après usinage. Ces nervures 14 sont préférentiellement réalisées dans un alliage d'acier à haute résistance.

Lors du sertissage, la seconde 9 ou la quatrième 12 portion de la machoire est en regard de la portion du raccord 3 sur laquelle est montée la bague 7. Les nervures 14 pénètrent dans la bague 7 et permettent la destruction de celle-ci de façon certaine.

Dans ce mode de réalisation, la dimension radiale des nervures 14 est telle que la distance de leur arête à l'axe A du raccord 3, lorsque la mâchoire 2 est en place sur le raccord 3, est sensiblement égale au rayon extérieur de ce raccord 3 dans sa portion portant la bague 7.

Selon une variante non représentée, les nervures 14 sont de dimension radiale telle que la distance de leur arête à l'axe A du raccord 3, lorsque la mâchoire est en place sur le raccord, est sensiblement inférieure au rayon extérieur de ce raccord 3 dans sa portion en portant la bague 7.

En conséquence, les nervures réalisent un léger marquage sur le raccord. Cette disposition est notamment avantageuse pour garantir le sectionnement de la bague 7 lorsque celle-ci est réalisée sous forme d'une couche fine de matière thermorétractable.

Il est à signaler que les mâchoires 2 sont utilisable non seulement avec les raccords de type cuivreux comme décrit ci-dessus, mais également avec des raccords pour tube plastiques, par exemple en polyéthylène réticulé, ou avec des raccords pour tubes multicouches.

Dans ce cas, le raccord comprend de façon connue une bague de sertissage, pouvant être en inox. La bague de visualisation destinée à être détruite peut-être montée sur cette bague de sertissage.

Comme il va se soi, l'invention ne se limite pas aux formes de réalisation préférentielle décrite ci-dessus, à titre d'exemple non limitatif ; elle en embrasse au contraire toutes les variantes de réalisation dans le cadre des revendications ci-après.

## Revendications

1. Mâchoire (2) de sertissage d'un raccord (3) pour tube (4), comportant au moins une partie en saillie (14) vers l'intérieur de la mâchoire (2) **caractérisée en ce que** ladite partie en saillie est adaptée pour couper une bague (7) de visualisation de sertissage extérieure au raccord (3), et **en ce qu'**au moins une partie en saillie est constituée par une nervure (14) orientée parallèlement à l'axe du raccord (A), lorsque la mâchoire (2) est positionnée sur le raccord (3).

2. Mâchoire (2) selon la revendication 1, **caractérisée en ce qu'**au moins une nervure (14) présente une section triangulaire, perpendiculairement à l'axe (A).

3. Mâchoire (2) selon l'une des revendications 1 et 2, **caractérisé en ce que** la dimension radiale d'au moins une partie en saillie (14) est telle que sa distance minimale à l'axe (A) du raccord (3), lorsque la mâchoire (2) est en place sur le raccord (3), est inférieure au rayon extérieur de ce raccord (3) dans sa portion portant une bague de visualisation (7).

4. Mâchoire (2) selon l'une des revendications 1 à 3, **caractérisé en ce qu'**au moins une partie en saillie (14) est constituée par un insert rapporté sur la mâchoire.

5. Mâchoire (2) selon l'une des revendications 1 à 4, **caractérisé en ce qu'**au moins une partie en saillie (14) est réalisée en acier à haute résistance.

6. Mâchoire (2) selon l'une des revendications 1 à 5, **caractérisé en ce qu'**elle présente un profil intérieur symétrique par rapport à un plan permettant de la positionner sur le raccord (3) indifféremment de son orientation.

7. Mâchoire (2) selon l'une des revendications 1 à 6, **caractérisée en ce qu'**elle comporte au moins une portion (8, 13) de profil semi-hexagonal, vu en coupe selon un plan perpendiculaire à l'axe du raccord (A) lorsque la mâchoire (2) est positionnée sur le raccord (3), la distance à l'axe (A) des sommets de l'hexagone étant sensiblement égale au rayon de la portion voisine (9, 12) de la mâchoire (2), et **en ce que** chaque nervure (14) est positionnée dans le prolongement d'un sommet.

8. Outil de sertissage comportant au moins une mâchoire (2) selon l'une des revendications 1 à 7.

## Claims

1. Jaw (2) for crimping a connector (3) for a pipe (4), which jaw has at least one part (14) projecting towards the inside of said jaw (2) and is **characterised in that** the said projecting part is adapted to cut a crimping indicator ring (7) which is external to the connector (3), and **in that** at least one projecting part is constituted by a rib (14) which is oriented in a manner parallel to the axis (A) of the connector when the jaw (2) is positioned on said connector (3).

2. Jaw (2) according to claim 1, **characterised in that** at least one rib (14) has a triangular section, perpendicularly to the axis (A).

3. Jaw (2) according to one of claims 1 and 2, **characterised in that** the radial dimension of at least one projecting part (14) is such that its minimum distance to the axis (A) of the connector (3), when the jaw (2) is in place on said connector (3), is smaller than the outer radius of the said connector (3) in its portion that carries an indicator ring (7).

4. Jaw (2) according to one of claims 1 to 3, **characterised in that** at least one projecting part (14) is constituted by an insert which has been added onto the jaw.

5. Jaw (2) according to one of claims 1 to 4, **characterised in that** at least one projecting part (14) is made of high-tensile steel.

6. Jaw (2) according to one of claims 1 to 5, **characterised in that** it has an inner profile which is symmetrical in relation to a plane which makes it possible to position it on the connector (3), whatever its orientation.

7. Jaw (2) according to one of claims 1 to 6, **characterised in that** it has at least one portion (8, 13) with a semi-hexagonal profile, viewed in section along a plane perpendicular to the axis (A) of the connector when the jaw (2) is positioned on said connector (3), the distance to the axis (A) of the peaks of the hexagon being substantially equal to the radius of the adjoining portion (9, 12) of the jaw (2), and **in that** each rib (14) is positioned in the extension of a peak.

8. Crimping tool having at least one jaw (2) according to one of claims 1 to 7.

## Patentansprüche

1. Backe (2) für eine Pressverbindung für ein Verbindungsstück (3) für ein Rohr (4) mit mindestes einem zum Inneren der Backe (2) hin vorstehenden Teil (14),
**dadurch gekennzeichnet, dass**
dieses vorstehende Teil dazu ausgelegt ist, einen außen am Verbindungsstück (3) liegenden Ring (7) zur Sichtbarmachung der Pressung zu durchtrennen, und dass mindestens ein vorstehender Teil aus einem Steg (14) besteht, der parallel zur Verbindungsachse (A) ausgerichtet ist, wenn die Backe (2) am Verbindungsstück (3) positioniert ist.

2. Backe (2) nach Anspruch 1,
**dadurch gekennzeichnet, dass**
mindestens ein Steg (14) einen dreieckigen Querschnitt senkrecht zur Achse (A) aufweist.

3. Backe (2) nach einem der Ansprüche 1 und 2,
**dadurch gekennzeichnet, dass**
die radiale Abmessung mindestens eines vorstehenden Teils (14) so ist, dass sein minimaler Abstand zur Achse (A) des Verbindungsstücks (3), wenn sich die Backe (2) am Verbindungsstück (3) an Ort und Stelle befindet, in seinem den Sichtbarmachungsring (7) tragenden Abschnitt, kleiner ist als der äußere Radius dieses Verbindungsstücks (3).

4. Backe (2) nach einem der Ansprüche 1 bis 3,
**dadurch gekennzeichnet, dass**
mindestens ein vorstehendes Teil (14) aus einem an der Backe angebrachten Einsatz besteht.

5. Backe (2) nach einem der Ansprüche 1 bis 4,
**dadurch gekennzeichnet, dass**
mindestens ein vorstehendes Teil (14) aus hoch widerstandsfähigem Stahl hergestellt ist.

6. Backe (2) nach einem der Ansprüche 1 bis 5,
**dadurch gekennzeichnet, dass**
sie in Bezug auf eine Ebene ein symmetrisches inneres Profil aufweist, das ermöglicht, sie am Verbindungsstück (3) ungeachtet ihrer Ausrichtung zu positionieren.

7. Backe (2) nach einem der Ansprüche 1 bis 6,
**dadurch gekennzeichnet, dass**
sie im Schnitt entlang einer zur Verbindungsachse (A) senkrechten Ebene gesehen mindestens einen Abschnitt (8, 13) mit Halbsechskantprofil umfasst, wenn die Backe (2) am Verbindungsstück (3) positioniert ist, wobei der Abstand zur Achse (A) von den Spitzen des Sechskants im Wesentlichen gleich dem Radius des Nachbarabschnitts (9, 12) der Backe (2) ist, und dass jeder Steg (14) in der Verlängerung einer Spitze positioniert ist.

8. Verpresswerkzeug mit mindestens einer Backe (2) nach einem der Ansprüche 1 bis 7.
